# EUROPEAN PATENT APPLICATION

(11) **EP 3 373 094 A1**
(43) Date of publication of application: **12.09.2018**
(21) Application number: 18156293.5
(22) Date of filing: 12.02.2018
(51) Int. Cl.: G05D 1/02, G06K 9/00, G08G 1/16, G01C 21/36

(54) **LANE-CHANGING SYSTEM FOR AUTOMATED VEHICLES**

(30) Priority: 07.03.2017 US 201715451558
(71) Applicant: Delphi Technologies LLC, Troy, MI 48007 (US)
(72) Inventor: KRISHNA PRASAD, Premchand, WESTFIELD, INDIANA 46074 (US); SAMIEI, Ehsan, KOKOMO, INDIANA 46902 (US); CHIA, Michael I., Cicero, Indiana 46034 (US)
(74) Representative: Robert, Vincent

(57) **Abstract**

A lane-changing system (10) suitable for use on an automated host-vehicle (12) includes a camera (32), an inertial-measurement-unit (44), and a controller (28). The camera (32) detects a lane-marking (38) of a roadway (36) traveled by the host-vehicle (12). The inertial-measurement-unit (44) determines relative-motion (46) of the host-host-vehicle (12). The controller (28) is in communication with the camera (32) and the inertial-measurement-unit (44). While the lane-marking (38) is detected the controller (28) steers the host-vehicle (12) towards a centerline (56) of an adjacent-lane (42) of the roadway (36) based on a last-position (60) and a current-vector (62), and determines an offset-vector (64) indicative of motion of the host-vehicle (12) relative to the current-vector (62). While the lane-marking (38) is not detected the controller (28) determines an offset-position (66) relative to the last-position (60) based on information from the inertial-measurement-unit (44), determines a correction-vector (68) used to steer the host-vehicle (12) from the offset-position (66) towards the centerline (56) of the adjacent-lane (42) of the roadway (36) based on the last-position (60) and the offset-vector (64), and steers the host-vehicle (12) according to the correction-vector (68) towards the centerline (56) of the adjacent-lane (42).

## Description

### TECHNICAL FIELD OF INVENTION

This disclosure generally relates to a lane-changing system for an automated vehicle, and more particularly relates to using historical vehicle motion information to operate an automated vehicle when a lane-marking is not detected by a camera.

### BACKGROUND OF INVENTION

It is known to operate, e.g. steer, an automated vehicle using a camera to detect features of a roadway such as lane-markings and curbs. However, in some instances those features may be inconsistent, degraded, or otherwise undetectable. In the absence of lane-markings, many systems simply disengage and give control back to the vehicle operator, even though lane-markings may be only momentarily undetected by the camera.

### SUMMARY OF THE INVENTION

In accordance with one embodiment, an automatic lane-changing system suitable for use on an automated vehicle is provided. The system includes a camera, an inertial-measurement-unit, and a controller. The camera is detects a lane-marking of a roadway traveled by a host-vehicle. The inertial-measurement-unit determines relative-motion of the host-vehicle. The controller is in communication with the camera and the inertial-measurement-unit. While the lane-marking is detected the controller determines a last-position of the host-vehicle relative to the lane-marking of the roadway. The controller also determines a current-vector used to steer the host-vehicle towards a centerline of an adjacent-lane of the roadway based on the last-position. The controller also determines an offset-vector indicative of motion of the host-vehicle relative to the current-vector. While the lane-marking is not detected the controller determines an offset-position relative to the last-position based on information from the inertial-measurement-unit. The controller also determines a correction-vector used to steer the host-vehicle from the offset-position towards the centerline of the adjacent-lane based on the last-position and the offset-vector, and steers the host-vehicle according to the correction-vector towards the centerline of the adjacent-lane.

The controller may further determine a last-vector based on a temporal-history of the current-vector, and the correction-vector is further based on the last-vector. the system may include a speed-sensor that measures speed of the host-vehicle, and the offset-position (may be also determined based on the speed

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a diagram of a lane-changing system in accordance with one embodiment;
Figs. 2A and 2B are illustrations of motion on a roadway of a host-vehicle equipped with the system of Fig. 1 in accordance with one embodiment; and
Figs. 3A and 3B are illustrations of motion on a roadway of a host-vehicle equipped with the system of Fig. 1 in accordance with one embodiment.

### DETAILED DESCRIPTION

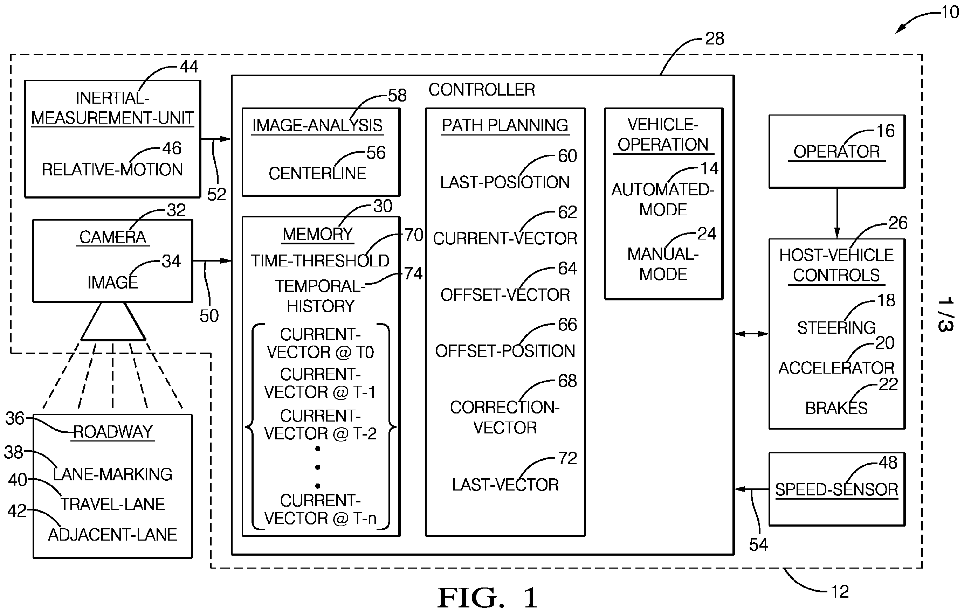

Fig. 1 illustrates a non-limiting example of a lane-changing system 10, hereafter referred to as the system 10, suitable for use on an automated vehicle, hereafter referred to as the host-vehicle 12. In general, the system 10 is configured to operate (i.e. drive) the host-vehicle 12 in an automated-mode 14 whereby an operator 16 of the host-vehicle 12 is little more than a passenger. That is, the operator 16 is not substantively involved with the steering 18 or operation of the accelerator 20 and brakes 22 of the host-vehicle 12. It is contemplated that the host-vehicle 12 may also be operated in a manual-mode 24 where the operator 16 is fully responsible for operating the host-vehicle-controls 26, or in a partial-mode (not shown) where control of the host-vehicle 12 is shared by the operator 16 and a controller 28 of the system 10.

The controller 28 may include a processor (not specifically shown) such as a microprocessor or other control circuitry such as analog and/or digital control circuitry including an application specific integrated circuit (ASIC) for processing data as should be evident to those in the art. The controller 28 may include a memory 30, including non-volatile memory, such as electrically erasable programmable read-only-memory (EEPROM) for storing one or more routines, thresholds, and captured data. The one or more routines may be executed by the processor to perform steps for operating the host-vehicle 12 based on signals received by the controller 28 as described herein.

The system 10 includes a camera 32 used to capture an image 34 of a roadway 36 traveled by the host-vehicle 12. Examples of the camera 32 suitable for use on the host-vehicle 12 are commercially available as will be recognized by those in the art, one such being the APTINA MT9V023 from Micron Technology, Inc. of Boise, Idaho, USA. The camera 32 may be mounted on the front of the host-vehicle 12, or mounted in the interior of the host-vehicle 12 at a location suitable for the camera 32 to view the area around the host-vehicle 12 through the windshield of the host-vehicle 12. The camera 32 is preferably a video type camera 32 or camera 32 that can capture images of the roadway 36 and surrounding area at a sufficient frame-rate, of ten frames per second, for example.

The image 34 may include, but is not limited to, a lane-marking 38 on a left-side and right-side of a travel-lane 40 of the roadway 36 traveled by the host-vehicle 12. The image 34 may also include the lane-marking 38 on the left-side and the right-side of an adjacent-lane 42 to the travel-lane 40. The lane-marking 38 may include a solid-line, as is typically used to indicate the boundary of a travel-lane 40 of the roadway 36. The lane-marking 38 may also include a dashed-line, as is also typically used to indicate the boundary of a travel-lane 40 of the roadway 36. The lane-marking 38 may become non-existent or otherwise undetectable by the camera 32 for a number of reasons such as, but not limited to, fading of the lane-marking-paint, erosion of the road surface, snow or dirt on the roadway 36, precipitation or dirt on the lens of the camera 32, operational failure of the camera 32, etc.

The system 10 also includes an inertial-measurement-unit 44, hereafter referred to as the IMU 44, used to determine a relative-motion 46 of the host-vehicle 12. The relative-motion 46 measured by the IMU 44 may include the host-vehicle's 12 current yaw rate, longitudinal acceleration, lateral acceleration, pitch rate, and roll rate. One example of the several instances of the IMU 44 suitable for use on the host-vehicle 12 that are commercially available as will be recognized by those in the art, is the 6DF-1N6-C2-HWL from Honeywell Sensing and Control, Golden Valley, Minnesota, USA.

The system 10 may also include a speed-sensor 48 used to determine a speed of the host-vehicle 12. The speed-sensor 48 may include a wheel-speed-sensor typically found on automotive applications. Other sensors capable of determining the speed of the host-vehicle 12 may include, but are not limited to, a global-positioning-system (GPS) receiver, and a RADAR transceiver, and other devices as will be recognized by those skilled in the art.

The controller 28 is in electrical communication with the camera 32 and the IMU 44 so that the controller 28 can receive the image 34, via a video-signal 50, and the relative-motion 46 of the host-vehicle 12, via a position-signal 52. The position-signal 52 originates in the IMU 44 and may include the host-vehicle's 12 current yaw rate, longitudinal acceleration, lateral acceleration, pitch rate, and roll rate, which defines the relative-motion 46 of the host-vehicle 12, e.g. lateral-motion, longitudinal-motion, change in yaw-angle, etc. of the host-vehicle 12. The controller 28 is also in electrical communication with the speed-sensor 48 so that the controller 28 can receive a speed of the host-vehicle 12 via a speed-signal 54. The controller 28 is also in electrical communication with the vehicle-controls 26.

The controller 28 is generally configured (e.g. programmed or hardwired) to determine a centerline 56 of the adjacent-lane 42 based on the lane-marking 38 of the roadway 36 detected by the camera 32. That is, the image 34 detected or captured by the camera 32 is processed by the controller 28 using known techniques for image-analysis 58 to determine where along the roadway 36 the host-vehicle should be operated or be steered when executing a lane-changing maneuver. Vision processing technologies, such as the EYE Q® platform from Moblieye Vision Technologies, Ltd. of Jerusalem, Israel, or other suitable devices may be used. By way of example and not limitation, the centerline 56 is preferably in the middle of the adjacent-lane 42 to the travel-lane 40 traveled by the host-vehicle 12.

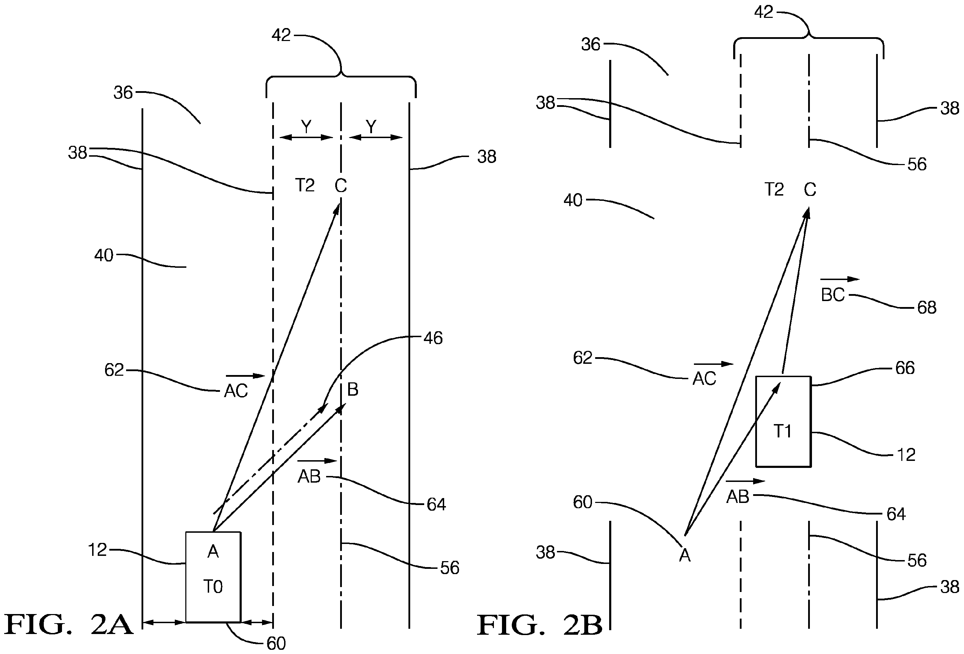

Fig. 2A illustrates a non-limiting example of when the controller 28 is steering 18 the host-vehicle 12 in the automated-mode 14 from point A in the travel-lane 40 at time TO towards a desired point C located at the centerline 56 of the adjacent-lane 42 (i.e. a lane-changing maneuver). The controller 28 is using the lane-marking 38 as detected by the camera 32 to determine the centerline 56 of the adjacent-lane 42. Point C is located at a predetermined distance, possibly on a line-of-sight, in front of the host-vehicle 12, as will be recognized by one skilled on the art of automated vehicle controls, and represents the desired position of the host-vehicle 12 at time T2, which is understood to be in the future relative to time T0. The controller 28 may determine a last-position 60 of the host-vehicle 12 relative to the lane-marking 38 of the roadway 36. The last-position 60 may be updated by the controller 28 based on a predetermined rate, between one millisecond (1ms) and 100ms for example, to account for changes in the curvature of the roadway 36 as the host-vehicle travels along the roadway 36. The update rate may be varied based on the speed of the host-vehicle 12. When the lane-marking 38 is detected by the camera 32, the last-position 60 and point A coincide or are coincident. By way of example and not limitation, the last-position 60 is shown to be located to the left of the centerline 56 of the adjacent-lane 42 at time TO in Fig. 2A.

The controller 28 may also determine a current-vector 62, represented by the arrow labeled AC, which illustrates the speed and direction of the host-vehicle 12 being steered by the controller 28 from point A to the desired point C, based on the last-position 60. The controller 28 may also determine an offset-vector 64 that indicates the actual motion of the host-vehicle 12 relative to the current-vector 62. The offset-vector 64 is represented by the arrow labeled AB, which illustrates the actual speed and actual direction of the host-vehicle 12 traveling from point A to point B. The offset-vector 64 may differ from the current-vector 62 due to crowning of the roadway 36, wind gusts, standing water, and other phenomena. Input from the IMU 44, the camera 32, and the speed-sensor 48 is used by the controller 28 to determine the offset-vector 64, as will be recognized by one skilled in the art.

Fig. 2B shows a non-limiting example for when the lane-marking 38 is not detected by the camera 32, as illustrated in the figure by the discontinuity or termination of the lane-marking 38 after point A. The discontinuity of the lane-marking 38 may occur on either side, or both sides, of the roadway 36. At time T1, the host-vehicle 12 has moved from the last-position 60 to point B and the controller 28 has determined the offset-vector 64 as described previously. The controller 28 may also determine an offset-position 66 relative to the last-position 60, and based on the relative-motion 46 information received from the IMU 44 and based on the speed of the host-vehicle 12 received from the speed-sensor 48. The offset-position 66 is defined as the position attained by the host-vehicle 12 that is off the desired path of travel, or in other words, how far the host-vehicle 12 is off-course from the current-vector 62. The controller 28 may also determine a correction-vector 68, illustrated by the arrow BC, used to steer the host-vehicle 12 from the offset-position 66 to the desired point C. The correction-vector 68 is defined as the host-vehicle's 12 direction and host-vehicle's 12 speed needed to steer the host-vehicle 12 back to the desired point C, as previously determined by the controller 28. The correction-vector 68 is based on the last-position 60 and the offset-vector 64, and is determined using the known method of vector algebra, where the correction-vector 68 is equal to the difference between the current-vector 62 and the offset-vector 64. The controller 28 then steers the host-vehicle 12 according to the correction-vector 68 until either the lane-marking 38 is detected by the camera 32, or until a time-threshold 70 (Fig. 1) has been reached where the host-vehicle-operation is returned to manual-mode 24. The time-threshold 70 may vary according to the speed of the host-vehicle 12.

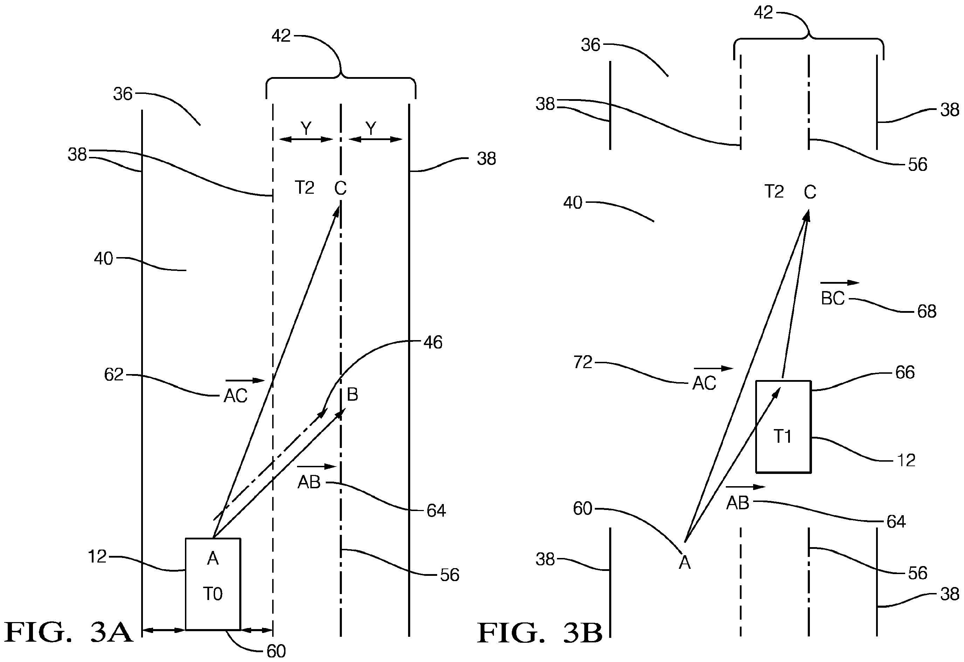

Fig. 3B shows another embodiment where the controller 28 may also determine a last-vector 72, which is based on a temporal-history 74 (Fig. 1) of the current-vector 62. The temporal-history 74 is defined as a series of data going back in time from the current data point. The last-vector 72 is stored in the memory 30 of the controller 28, thereby generating a data-buffer of the previous current-vector 62 data points. The last-vector 72 may be updated at a rate of between 1ms and 100ms. A predetermined number of the data points in the temporal-history 74 may be used to determine the last-vector 72 by known methods of data processing such as a running-average, an average of the ten most recent data points, an infinite-filter, and other methods known to one skilled in the art of data processing. The controller 28 may also determine the correction-vector 68, illustrated by the arrow BC, based on the last-vector 72 and steer the host-vehicle 12 according to the correction-vector 68 until either the lane-marking 38 is detected by the camera 32, or until the time-threshold 70 has been reached where the host-vehicle-operation is returned to manual-mode 24. The correction-vector 68 is defined as the host-vehicle's 12 direction and host-vehicle's 12 speed needed to steer the host-vehicle 12 back to the desired point C, as previously determined by the controller 28.

Accordingly, a lane-changing system 10 (the system 10), and controller 28 for the system 10 is provided. In contrast to prior systems, the system 10 described herein delays the disengagement of automated driving controls when lane-markings 38 are non-existent, or otherwise undetectable by the camera 32. The disengagement of automated driving controls when changing lanes, even though the lane-markings 38 are momentarily undetectable, can lead to significant customer dissatisfaction and annoyance.

While this invention has been described in terms of the preferred embodiments thereof, it is not intended to be so limited, but rather only to the extent set forth in the claims that follow. Moreover, the use of the terms first, second, upper, lower, etc. does not denote any order of importance, location, or orientation, but rather the terms first, second, etc. are used to distinguish one element from another. Furthermore, the use of the terms a, an, etc. do not denote a limitation of quantity, but rather denote the presence of at least one of the referenced items.

## Claims

1. An automatic lane-changing system (10) suitable for use on an automated vehicle, said system (10) comprising:
a camera (32) that detects a lane-marking (38) of a roadway (36) traveled by a host-vehicle (12);
an inertial-measurement-unit (44) that determines relative-motion (46) of the host-vehicle (12); and
a controller (28) in communication with the camera (32) and the inertial-measurement-unit (44), wherein while the lane-marking (38) is detected said controller (28)
determines a last-position (60) of the host-vehicle (12) relative to the lane-marking (38) of the roadway (36), determines a current-vector (62) used to steer the host-vehicle (12) towards a centerline (56) of an adjacent-lane (42) of the roadway (36) based on the last-position (60), and determines an offset-vector (64) indicative of motion of the host-vehicle (12) relative to the current-vector (62), and while the lane-marking (38) is not detected said controller (28) determines an offset-position (66) relative to the last-position (60) based on information from the inertial-measurement-unit (44), determines a correction-vector (68) used to steer the host-vehicle (12) from the offset-position (66) towards the centerline (56) of the adjacent-lane (42) based on the last-position (60) and the offset-vector (64), and steers the host-vehicle (12) according to the correction-vector (68) towards the centerline (56) of the adjacent-lane (42).

2. The system (10) in accordance with claim 1, wherein the controller (28) further determines a last-vector (72) based on a temporal-history (74) of the current-vector (62), and the correction-vector (68) is further based on the last-vector (72).

3. The system (10) according to any one of the preceding claims, wherein the system (10) includes a speed-sensor (48) that measures speed of the host-vehicle (12), and the offset-position (66) is also determined based on the speed.
